# EUROPEAN PATENT SPECIFICATION

(11) **EP 3 672 710 B1**
(45) Date of publication and mention of the grant of the patent: **22.09.2021**
(21) Application number: 18760222.2
(22) Date of filing: 13.08.2018
(51) Int. Cl.: B01D 53/14, B01D 53/18, B01D 53/22, C07C 7/11, C10L 3/10, B01D 53/75

(54) **INTEGRATION OF COLD SOLVENT AND ACID GAS REMOVAL**
INTEGRATION VON KALTEN LÖSUNGSMITTELN UND ENTFERNUNG VON SAUREN GASEN
INTÉGRATION DE SOLVANT FROID ET ÉLIMINATION DE GAZ ACIDE

(30) Priority: 21.08.2017 US 201762548171 P
(43) Date of publication of application: 01.07.2020
(73) Proprietor: ExxonMobil Upstream Research Company, Spring, TX 77389 (US)
(72) Inventor: MAHER, David, W., Spring, TX 77386 (US); NORTHROP, P., Scott, The Woodlands, TX 77382 (US); RAMKUMAR, Shwetha, Cypress, TX 77433 (US); DENTON, Robert, D., Bellaire, TX 77401 (US)
(74) Representative: ExxonMobil Chemical Europe Inc.
(86) International application number: PCT/US2018/046495
(87) International publication number: WO 2019/040305

(56) References cited:
- WO-A1-2015/105438
- US-A- 4 589 896
- US-A1- 2011 290 111
- US-A1- 2015 352 463
- US-A1- 2017 114 295

## Description

### BACKGROUND

### Field of Disclosure

The disclosure relates generally to the separation of impurities from a gas stream, such as a natural gas stream. More specifically, the disclosure relates to controlling a temperature of a gas stream, through the use of membrane separation technologies, for example, to reduce a reaction temperature of the gas stream and a solvent.

### Description of Related Art

This section is intended to introduce various aspects of the art, which may be associated with the present disclosure. This discussion is intended to provide a framework to facilitate a better understanding of particular aspects of the present disclosure. Accordingly, it should be understood that this section should be read in this light, and not necessarily as an admission of prior art.

Membranes work by preferentially permeating the acid gas (e.g., CO₂ and H₂S) through the membrane to a lower pressure, which cools both the process gas and permeate. Membranes are a bulk removal technology, so an amine-based clean-up step to remove H₂S (and sometimes CO₂, though those applications are not the focus here) is almost always required to meet a pipeline gas specification. The use of membrane separation of acid gas from natural gas is disclosed in United Stated Patent Publication No. 4,589,896.

Hindered amines, such as Flexsorb/SE, are engineered to preferentially remove H₂S and let CO₂ slip through with the treated gas. The amines achieve selective H₂S removal by reacting more quickly with H₂S than CO₂. The value in becoming selective to H₂S is that fewer molecules of amine are required to remove the H₂S in the system because fewer side reactions with CO₂ take place. It is well known in the industry that at colder temperatures (50-80 °F) the reactions with CO₂ slow down significantly and the reaction becomes even further selective towards H₂S. It has been discovered that selectivity to H₂S may be further enhanced, thus reducing solvent circulation by up to an order of magnitude, by chilling the solvent itself before contacting a gas stream. Such solvent chilling further reduces the CO₂ reaction rate. Additionally, providing a very short contact time between the gas stream and the amine solvent permits the amine just enough time to pick up the H₂S but too little contact time to react with an appreciable amount of CO₂. Thus, more CO₂ slips, and less solvent is required. It would therefore be advantageous to provide a method and/or system that reduces the required amount of amine solvent used in a contactor operating with a membrane separation system.

### SUMMARY

The present disclosure provides a method of separating impurities from a natural gas stream. According to the method, a portion of the carbon dioxide (CO₂) and hydrogen sulfide (H₂S) are separated from the natural gas stream in a membrane separation system, thereby creating a partially-treated gas stream and a permeate gas stream. The permeate gas stream is comprised primarily of H₂S and CO₂. The partially-treated gas stream is comprised primarily of natural gas. The partially-treated gas stream and the permeate gas stream are at a lower temperature than the natural gas stream. The partially-treated gas stream is contacted with a first lean solvent stream comprising a hindered amine in a first contactor to separate H₂S from the partially-treated gas stream, thereby producing a first rich solvent stream and a fully-treated gas stream. The permeate gas stream is contacted with a second lean solvent stream comprising a hindered amine in a second contactor to separate H₂S therefrom to produce a second rich solvent stream and a CO₂-rich gas stream. H₂S and CO₂ are removed from the first and second rich solvent streams, thereby producing the first and second lean solvent streams.

The present disclosure also provides a system for separating impurities from a natural gas stream. A membrane separation system separates a portion of the carbon dioxide (CO₂) and hydrogen sulfide (H₂S) from the natural gas stream, thereby creating a partially-treated gas stream and a permeate gas stream. The permeate gas stream is comprised primarily of H₂S and CO₂ and the partially-treated gas stream is comprised primarily of natural gas. The partially-treated gas stream and the permeate gas stream are at a lower temperature than the natural gas stream. A first contactor contacts the partially-treated gas stream with a first lean solvent stream comprising hindered amine to separate H₂S from the partially-treated gas stream, thereby producing a first rich solvent stream and a fully-treated gas stream. A second contactor contacts the permeate gas stream with a second lean solvent stream comprising hindered amine to separate H₂S therefrom to produce a second rich solvent stream and a CO₂-rich gas stream. A regenerator removes H₂S and CO₂ from the first and second rich solvent streams, thereby producing the first and second lean solvent streams.

The foregoing has broadly outlined the features of the present disclosure so that the detailed description that follows may be better understood. Additional features will also be described herein.

### BRIEF DESCRIPTION OF THE DRAWINGS

These and other features, aspects and advantages of the disclosure will become apparent from the following description, appending claims and the accompanying drawings, which are briefly described below.
**Figure 1** is a schematic diagram of a natural gas separation system according to known principles.
**Figure 2** is a schematic diagram of a natural gas separation system according to disclosed aspects.
**Figure 3** is a schematic diagram of a natural gas separation system according to still other disclosed aspects.
**Figure 4** is a schematic diagram of a natural gas separation system according to yet other disclosed aspects, not according to the present invention.
**Figure 5** is a side elevational view of a co-current contacting system according to disclosed aspects.
**Figures 6A** **― 6D** are side elevational views and perspective views of droplet generators according to disclosed aspects.
**Figure 7** is a flowchart of a method according to aspects of the disclosure.
**Figure 8** is a flowchart of a method according to aspects of the disclosure, not according to the present invention.

It should be noted that the figures are merely examples and no limitations on the scope of the present disclosure are intended thereby. Further, the figures are generally not drawn to scale, but are drafted for purposes of convenience and clarity in illustrating various aspects of the disclosure.

### DETAILED DESCRIPTION

To promote an understanding of the principles of the disclosure, reference will now be made to the features illustrated in the drawings and specific language will be used to describe the same. It will nevertheless be understood that no limitation of the scope of the disclosure is thereby intended. Any alterations and further modifications, and any further applications of the principles of the disclosure as described herein are contemplated as would normally occur to one skilled in the art to which the disclosure relates. For the sake of clarity, some features not relevant to the present disclosure may not be shown in the drawings.

At the outset, for ease of reference, certain terms used in this application and their meanings as used in this context are set forth. To the extent a term used herein is not defined below, it should be given the broadest definition persons in the pertinent art have given that term as reflected in at least one printed publication or issued patent.

As one of ordinary skill would appreciate, different persons may refer to the same feature or component by different names. This document does not intend to distinguish between components or features that differ in name only. The figures are not necessarily to scale. Certain features and components herein may be shown exaggerated in scale or in schematic form and some details of conventional elements may not be shown in the interest of clarity and conciseness. When referring to the figures described herein, the same reference numerals may be referenced in multiple figures for the sake of simplicity. In the following description and in the claims, the terms "including" and "comprising" are used in an openended fashion, and thus, should be interpreted to mean "including, but not limited to."

The articles "the," "a" and "an" are not necessarily limited to mean only one, but rather are inclusive and open ended so as to include, optionally, multiple such elements.

As used herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numeral ranges provided. Accordingly, these terms should be interpreted as indicating that insubstantial or inconsequential modifications or alterations of the subject matter described and are considered to be within the scope of the disclosure.

"Exemplary" is used exclusively herein to mean "serving as an example, instance, or illustration." Any embodiment or aspect described herein as "exemplary" is not to be construed as preferred or advantageous over other embodiments.

"Acid gas" refers to any gas that produces an acidic solution when dissolved in water. Non-limiting examples of acid gases include hydrogen sulfide (H₂S), carbon dioxide (CO₂), sulfur dioxide (SO₂), carbon disulfide (CS₂), carbonyl sulfide (COS), mercaptans, or mixtures thereof.

"Co-current contactor" refers to a vessel that receives a gas stream and a separate solvent stream in such a manner that the gas stream and the solvent stream contact one another while flowing in generally the same direction.

The term "co-currently" refers to the internal arrangement of process streams within a unit operation that can be divided into several sub-sections by which the process streams flow in the same direction.

As used herein, a "column" is a separation vessel in which a counter-current flow is used to isolate materials on the basis of differing properties.

"Dehydrated natural gas stream" or "dry natural gas stream" refers to a natural gas stream that has undergone a dehydration process. Depending on the application, the dehydrated natural gas stream may have a water content of less than 150 parts per million (ppm), less than 100 ppm, less than 84 ppm, than 50 ppm, less than 7 ppm, or less than 0.1 ppm. Any suitable process for dehydrating the natural gas stream can be used. Typical examples of suitable dehydration processes include, but are not limited to dehydration using glycol or methanol.

As used herein, the term "dehydration" refers to the pre-treatment of a raw feed gas stream to partially or completely remove water and, optionally, some heavy hydrocarbons.

As used herein, the term "facility" is used as a general term to encompass oil and gas field gathering systems, processing platform systems, and well platform systems.

The term "gas" is used interchangeably with "vapor," and is defined as a substance or mixture of substances in the gaseous state as distinguished from the liquid or solid state. Likewise, the term "liquid" means a substance or mixture of substances in the liquid state as distinguished from the gas or solid state.

A "hydrocarbon" is an organic compound that primarily includes the elements hydrogen and carbon, although nitrogen, sulfur, oxygen, metals, or any number of other elements can be present in small amounts. As used herein, hydrocarbons generally refer to components found in natural gas, oil, or chemical processing facilities.

The disclosure describes a method and system that takes advantage of the inherent cooling of the outputs of a membrane separation system to reduce the reaction temperature of a gas stream and a solvent in one or more contactor vessels. The contactor vessels may operate according to conventional counter-current contacting principles, or in an aspect, may comprise one or more co-current contacting systems. The solvent, is a hindered amine, may be cooled to below ambient temperature prior to being fed into the contactor vessels. One or more outputs of the membrane separation system, which may include a treated gas stream and a permeate gas stream, may likewise be cooled or chilled prior to being introduced into a contacting vessel. The effect of such cooling or chilling is that the reaction inside each contacting vessel may be adjusted to be more selective to hydrogen sulfide (H₂S) and less selective to carbon dioxide (CO₂). The H₂S-selectivity may be improved, thereby reducing the solvent flow required for separation.

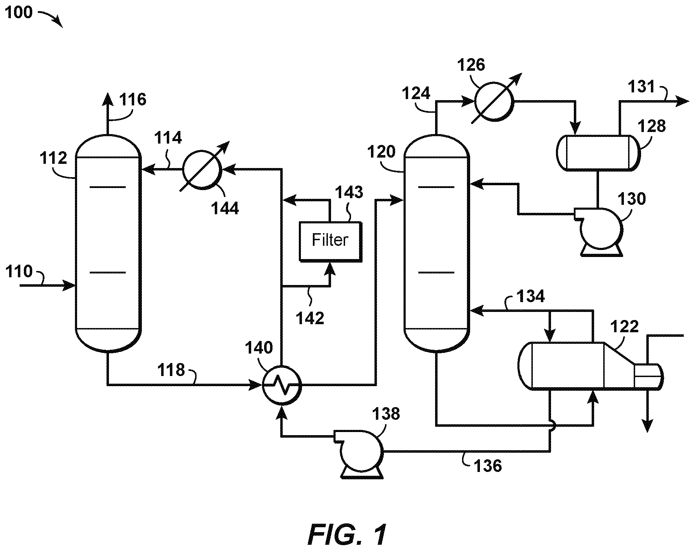

**Figure 1** is a schematic diagram of a natural gas separation system according to known principles. System **100** may be used to treat a feed gas stream **110** that has a high sour gas content. The feed gas stream comprises natural gas as well as acid gases such as CO₂ and H₂S. The feed gas stream **110** enters a contactor vessel **112** that enables contact between the feed gas stream **110** and a lean solvent stream **114**, which comprises a solvent that removes acid gases from the feed gas stream. A sweetened gas stream **116**, having most if not all acid gases removed, exits toward the top of the contactor vessel **112**. A rich solvent stream **118**, which is mostly liquid, exits near the bottom of the contactor vessel and enters a regeneration vessel **120**, in which heat from a reboiler **122** generates steam by partially boiling the rich solvent stream. This separates the acid gases from the solvent, which becomes leaner (i.e., containing less acid gases) as it moves down the regeneration vessel. The resulting acid gas stream **124** exits near the top of the regeneration vessel **120** and is cooled in a condenser **126**, which condenses much of the water in the acid gas stream **124**. This water is collected in a reflux accumulator **128** and is pumped using pump **130** back to the top of the regeneration vessel **120** as needed. An acid gas stream **131**, rich in H₂S and CO₂, exits the reflux accumulator **128** and is sent to a sulfur recovery unit (not shown) to remove the sulfur therefrom.

In the regeneration vessel **120**, the downwardly moving lean solvent exits the bottom of the regeneration vessel. The solvent becomes leaner as the acid gases are stripped therefrom in the regeneration vessel. The lean solvent exits the bottom of the regeneration vessel and enters the reboiler **122**, which heats the lean solvent to vaporize any remaining acid gas therein. A lean, hot amine stream is withdrawn from the reboiler, with a first portion **134** returned to the regeneration vessel **120** and a second portion **136** pumped using a circulation pump **138** to be fed through a heat exchanger **140**. The heat exchanger **140** exchanges heat between the second portion **136** of the lean, hot amine stream and the rich solvent stream. A slip stream **142** of the second portion **136** may be taken for filtration by using a filter **143** according to known principles, to keep the second portion **136** clean. The second portion is then cooled to ambient temperature in cooler **144** to become the cooled, lean solvent stream **114**, which is recycled to the contactor vessel **112**.

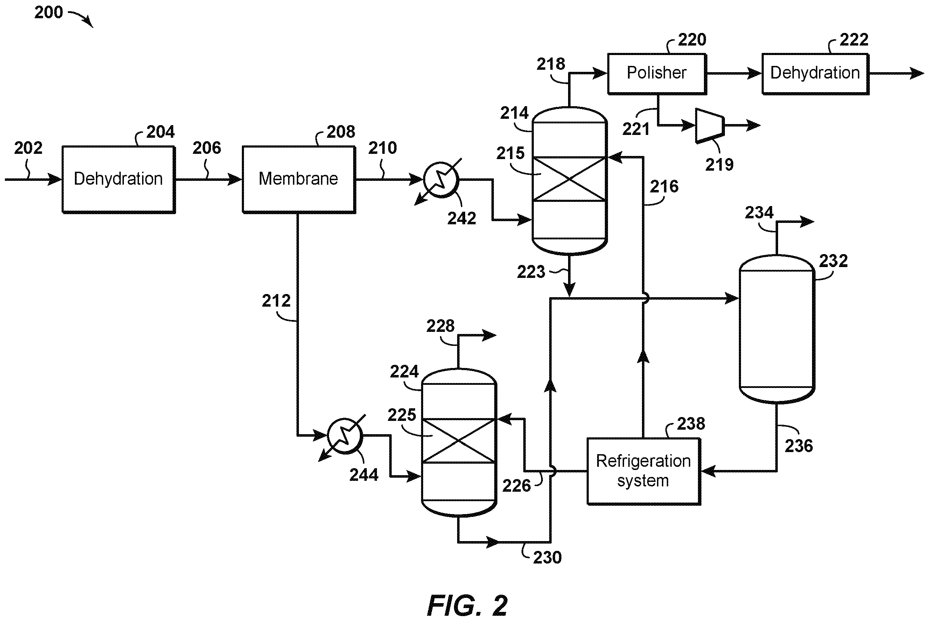

**Figure 2** is a schematic diagram of a sour gas separation system **200** according to an aspect of the disclosure. Sour gas separation system **200** may be used to treat a feed gas stream **202** that has a high acid gas content. Water is removed from the feed gas stream **202** in a dehydrator **204** to the extent required to prevent water from condensing or hydrates forming in the membrane separation or chilling systems downstream. The dehydrator may be any known type of dehydration system, such as a glycol based solvent dehydration system and process, and more specifically, a triethylene glycol (TEG) unit. The dehydrated gas stream **206** passes through a membrane separation system **208**. The membrane separation system **208** operates according to known principles to separate most of the carbon dioxide and hydrogen sulfide present in the dehydrated gas stream. For example, the membrane separation system **208** may produce a partially-treated gas stream **210** with a composition of 6% carbon dioxide (CO₂), about **500** parts per million (ppm) of hydrogen sulfide (H₂S), with the remainder being natural gas. The membrane separation system 208 may also produce a permeate gas stream **212** with a composition of 50%-95% CO₂ and 0.001%-5.0% H₂S, or 70-95% carbon dioxide and 0.1-2.0% H₂S, with the remainder being natural gas. Due to the nature of the membrane separation system, the temperature of the partially-treated gas stream **210** may be reduced to about 50 °F and its pressure reduced to about 500 psig, while the temperature of the permeate gas stream **212** may be reduced to about 70 °F and its pressure reduced to about 100 psig. A non-limiting example of a suitable membrane separation system can be found in "Typical Amine and Glycol Treating Unit Compared to Gas Membrane Separation System for Wellhead CO2 Trimming" (Laurance Reid Gas Conditioning Conference, Norman, OK, 2010).

According to disclosed aspects, the partially-treated gas stream **210** is introduced into a first cold solvent contactor **214**. The first cold solvent contactor **214** contacts the partially-treated gas stream **210** with a first chilled lean solvent stream **216** in a packing layer **215** to separate H₂S out of the partially-treated gas stream **210**. The first chilled lean solvent stream **216** comprises a hindered amine, such as Flexsorb/SE, which has been engineered to preferentially remove H₂S and permit CO₂ to slip through the process. The hindered amine achieves selective H₂S removal by reacting more quickly with H₂S than with CO₂. The H₂S-selective hindered amine requires fewer amine molecules to remove the H₂S in the system, when compared with non-H₂S selective amines, because fewer side reactions between the hindered amine and CO₂ take place. Furthermore, at temperatures between 50-80 °F (1 °F = -17,22 °C) the reaction between the hindered amine and CO₂ slow down significantly, and therefore the interaction between the partially-treated gas stream **210** (which is at a temperature of about 50 °F) and the hindered amine in the first chilled lean solvent stream **216** is even further selective towards H₂S. According to aspects of the disclosure, the selectivity toward H₂S may therefore be enhanced by (a) chilling the first lean solvent stream **216** prior to entering the first cold solvent contactor **214**, and (b) reducing the contact time between the partially-treated gas stream **210** and the first chilled lean solvent stream **216**. Providing a very short contact time (via a shorter packing height or using a co-current contactor, for example) between the sour gas and amine allows the amine just enough time to pick up the H₂S but too little contact time to react with an appreciable amount of CO₂. Thus, more CO₂ slips, and less solvent is required. It has been discovered that by enhancing H₂S selectivity by doing steps (a) and (b) above, a much smaller solvent flow rate is needed to separate the H₂S in the treated gas stream - up to an order of magnitude less than separators operating at higher temperatures. The use of a cold solvent is further described in United States Patent Publication No. 2017/0239612, titled "Cold Solvent Gas Treating System".

A fully-treated gas stream **218** exits the top of the first cold solvent contactor **214**. The fully-treated gas stream **218** is rich in natural gas and is very low in acid gas. Sometimes to meet product pipeline specifications, the CO₂ concentration in the fully-treated gas stream 218 may be further reduced in a polishing unit **220**, which in an aspect may comprise a co-current contacting system such as is disclosed in United States Patent Publication No. 2015/0352463, "Contacting a Gas Stream with a Liquid Stream". A carbon dioxide gas stream **221**, separated from the fully-treated gas stream **218** in the polishing unit, may be re-compressed in a compressor **219** and combined with a cleaned CO₂ gas stream **228** as further described herein. In this manner, all the CO₂ extracted from the feed gas stream **202** can be recovered, essentially free of H₂S. Such CO₂ extraction and recovery is especially advantageous where there is a ready market for the CO₂. The fully-treated gas stream **218** may be further processed through a dehydration unit **222** to reduce water in the sales gas stream to an acceptable level. A first rich solvent stream **223** exits the bottom of the first cold solvent contactor **214**. The first rich solvent stream includes the H₂S from the partially-treated gas stream **210** that was separated therefrom in the first cold solvent contactor **214**.

The permeate gas stream **212**, which as previously described may comprise approximately 50%-95% CO₂ or 70-95% CO₂, is introduced into a second cold solvent contactor **224**. The second cold solvent contactor **224** contacts the permeate gas stream **212** with a second chilled lean solvent stream **226** in a packing layer **225** to separate H₂S out of the permeate gas stream **212**. The second chilled lean solvent stream **226** comprises a hindered amine, and in a preferred aspect has the same composition as the first chilled lean solvent stream **216**. The second cold solvent contactor **224** may operate in a similar manner as the first cold solvent contactor **214**, and for the sake of brevity its operation will not be further described herein. A cleaned CO₂ gas stream **228**, substantially free of H₂S, exits the top of the second cold solvent contactor **224** to be vented or transported for further use or processing. A second rich solvent stream **230** exits the bottom of the second cold solvent contactor **224**. The second rich solvent stream **230** includes the H₂S from the permeate gas stream **212** that was separated therefrom in the second cold solvent contactor **224**.

The first and second rich solvent streams **223**, **230** are regenerated to separate the H₂S (and residual CO₂) from the solvent contained therein. In a preferred aspect, the first and second rich solvent streams are combined and sent to a regenerator **232**. Regenerator **232** may include a regeneration vessel, a reboiler, a condenser, and/or an accumulator as shown in **Figure 1** at **120**, **122**, **126**, and **128**, respectively, and in the interests of brevity the specific components will not be further described. An H₂S-rich gas stream **234** is separated out of the regenerator **232** and may be sent to a sulfur recovery unit (not shown) according to known principles. With the H₂S (and CO₂) removed, the solvent now comprises a regenerated or lean solvent stream **236** that can be recirculated to the first and second cold solvent contactors **214**, **224**. Prior to recirculation, however, the lean solvent stream is cooled or chilled in a refrigeration system **238**, which in an aspect may be a propane chiller, an ammonia refrigerator, and/or an absorption chiller. The refrigeration system cools or chills the lean solvent stream **236** to a temperature below the ambient temperature, which may be below 50 °F, or below 45 °F, or below 40 °F, or below 35 °F. This differs from known acid gas separation systems that cool the lean amine prior to recirculation only to near the ambient temperature. As previously explained, chilling the lean solvent stream to below ambient temperature may significantly reduce the required solvent flow rate. The first and second chilled lean solvent streams **216**, **226** exit the refrigeration system and are recirculated to the first and second cold solvent contactors **214**, **224**, respectively.

Aspects of the disclosure shown in **Figure 2** rely upon the cooling of the dehydrated gas stream **206** by the gas expansion in the membrane separation system **208**. Additional cooling of the partially-treated gas stream **210** and the permeate gas stream **212** may be provided by first and second coolers **242**, **244**, respectively. This may be done to reduce the temperature of the partially-treated gas stream **210** and the permeate gas stream **212** to a temperature that may be more optimal for use in the first and second cold solvent contactors **214**, **224**.

The schematic of **Figure 2** is not intended to indicate that the sour gas separation system **200** is to include all the components shown in **Figure 2**. Further, any number of additional components may be included within the sour gas separation system **200**, depending on the details of the specific implementation. For example, the sour gas separation system **200** may include any suitable types of heaters, chillers, condensers, liquid pumps, gas compressors, filters, blowers, bypass lines, or other types of separation and/or fractionation equipment, valves, switches, controllers, pressure-measuring devices, temperature-measuring devices, level-measuring devices, or flow-measuring devices, among others.

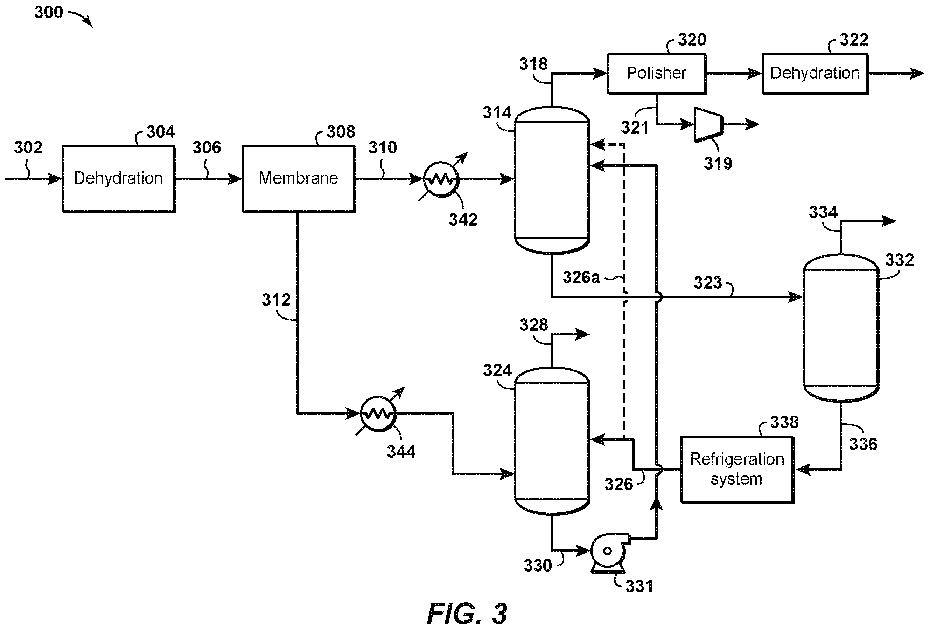

**Figure 3** is a schematic diagram of a sour gas separation system **300** according to another aspect of the disclosure, which is similar to system **200**. System **300** differs from system **200** in that the solvent systems are integrated together. The lightly-loaded chilled solvent from the permeate treatment could be pumped and used as a semi-lean solvent for the cold solvent on the process gas, since the latter will have a higher partial pressure of H₂S. As shown in **Figure 3**, water is removed from a feed gas stream **302** in a dehydrator **304**. The dehydrated gas stream **306** passes through a membrane separation system **308**. The membrane separation system operates according to known principles to separate most of the carbon dioxide and hydrogen sulfide present in the dehydrated gas stream. For example, the membrane separation system **308** may produce a partially-treated gas stream **310** with a composition of 6% carbon dioxide (CO₂), about 500 parts per million (ppm) of hydrogen sulfide (H₂S), with the remainder being natural gas. The membrane separation system **308** may also produce a permeate gas stream **312** with a composition of 50%-95% CO₂ and 0.001%-5.0% H₂S, or 70-95% carbon dioxide and 0.1-2.0% H₂S, with the remainder being natural gas. The temperature of the partially-treated gas stream **310** may be reduced to about 50 °F and its pressure reduced to about 500 psig (1 psig = 6,89 KPa), while the temperature of the permeate gas stream **312** may be reduced to about 70 °F and its pressure reduced to about 100 psig.

According to disclosed aspects, the partially-treated gas stream **310** is introduced into a first cold solvent contactor **314**. The permeate gas stream **312** is introduced into a second cold solvent contactor **324**. The second cold solvent contactor **324** contacts the permeate gas stream **312** with a chilled lean solvent stream **326** to separate H₂S out of the permeate gas stream **312**. The chilled lean solvent stream **326** comprises a hindered amine, such as Flexsorb/SE, as previously described. A cleaned CO₂ gas stream **328**, substantially free of H₂S, exits the top of the second cold solvent contactor **324** to be vented or transported for further use or processing. A semi-lean solvent stream **330** exits the bottom of the second cold solvent contactor **324**. The semi-lean solvent stream **330** includes the H₂S from the permeate gas stream **312** that was separated therefrom in the second cold solvent contactor **324**. The semi-lean solvent stream **330** is pumped using pump **331** to the first cold solvent contactor **314**, which contacts the partially-treated gas stream **310** with the semi-lean solvent stream to separate H₂S out of the partially-treated gas stream **310**.

A fully-treated gas stream **318** exits the top of the first cold solvent contactor **314**. The fully-treated gas stream **318** is rich in natural gas and is very low in acid gas. To meet pipeline specifications, the acid gas concentration in the fully-treated gas stream **318** may be further reduced in a polishing unit **320** and further processed through a dehydration unit 322 as described in previous aspects. A carbon dioxide gas stream **321**, separated from the fully-treated gas stream **318** in the polishing unit, may be re-compressed in a compressor **319** and combined with a cleaned CO₂ gas stream **328** as further described herein. A rich solvent stream **323** exits the bottom of the first cold solvent contactor **314**. The rich solvent stream includes the H₂S from the partially-treated gas stream **310** that was separated therefrom in the first cold solvent contactor **314**. In an aspect, a slipstream **326a** of chilled lean solvent stream **326** is sent to the top of the first cold solvent contactor **314** above semi-lean solvent stream **330** to further reduce H₂S in the partially-treated gas stream.

The rich solvent stream **323** is regenerated in a regenerator **332**, which separates the H₂S (and CO₂) from the solvent in the rich solvent stream. Regenerator **332** may include a regeneration vessel, a reboiler, a condenser, and/or an accumulator as shown in **Figure 1** at **120**, **122**, **126**, and **128**, respectively, and in the interests of brevity the specific components will not be further described. An H₂S-rich gas stream **334** is separated out of the regenerator **332** and may be sent to a sulfur recovery unit (not shown) according to known principles. With the H₂S removed, the solvent now comprises a lean solvent stream **336** that can be recirculated to the second cold solvent contactor **324**. Prior to recirculation, however, the lean solvent stream is cooled or chilled in a refrigeration system **338**, which cools or chills the lean solvent stream **336** to a temperature below the ambient temperature, which may be below 50 °F, or below 45 °F, or below 40 °F, or below 35 °F. This differs from known acid gas separation systems that cool the lean amine prior to recirculation only to near ambient temperature. As previously explained, chilling the lean solvent stream to below ambient temperature may significantly reduce the required solvent flow rate. The chilled lean solvent stream **326** exits the refrigeration system and is recirculated to the second cold solvent contactor.

Aspects of the disclosure shown in **Figure 3** rely upon the cooling of the dehydrated gas stream **306** by the membrane separation system **308**. Additional cooling of the partially-treated gas stream **310** and the permeate gas stream **312** may be provided by first and second coolers **342**, **344**, respectively. This may be done to reduce the temperature of the partially-treated gas stream **310** and the permeate gas stream **312** to a temperature that may be more optimal for use in the first and second cold solvent contactors **314, 324.**

The schematic of **Figure 3** is not intended to indicate that the sour gas separation system **300** is to include all the components shown in **Figure 3**. Further, any number of additional components may be included within the sour gas separation system **300**, depending on the details of the specific implementation. For example, the sour gas separation system **300** may include any suitable types of heaters, chillers, condensers, liquid pumps, gas compressors, filters, blowers, bypass lines, or other types of separation and/or fractionation equipment, valves, switches, controllers, pressure-measuring devices, temperature-measuring devices, level-measuring devices, or flow-measuring devices, among others.

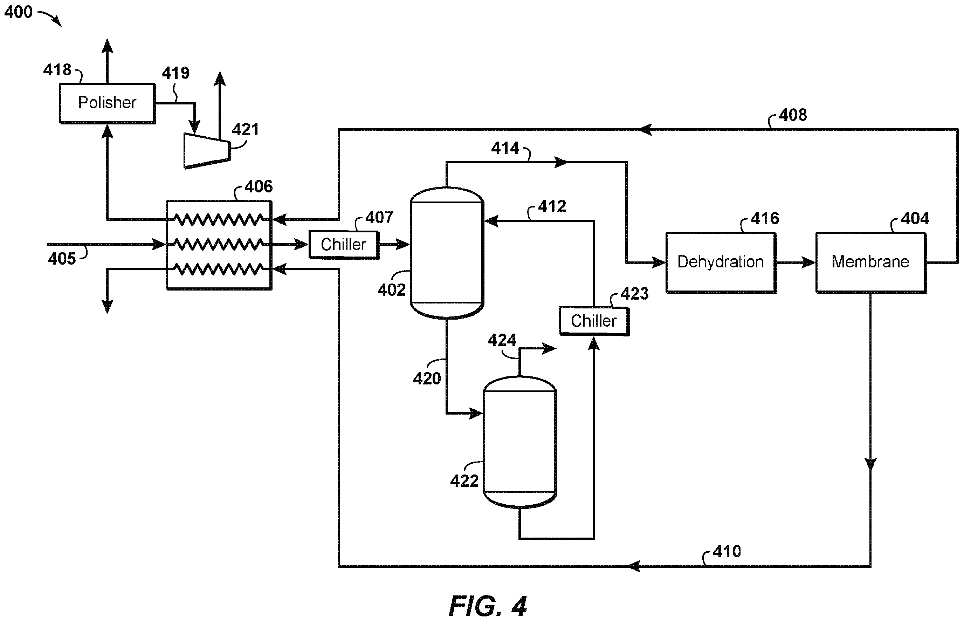

**Figure 4** depicts a sour gas separation system **400** according to another aspect of the disclosure, not according to the present invention, in which a single cold solvent contactor **402** is deployed upstream of the membrane system **404**. In this aspect, the feed gas stream **405** could be chilled in a heat exchanger **406** by cross-exchanging with one or more of the outlets from the membrane system **404**, which may include a fully-treated gas stream **408** and/or a permeate gas stream **410**. After being chilled in the heat exchanger **406** to a temperature of about 50 °F, for example, the feed gas stream **405**, which may be considered a chilled gas stream, may be further chilled in a refrigeration system or chiller **407** and introduced into the cold solvent contactor **402**. The cold solvent contactor **402** contacts the feed gas stream **405** with a lean solvent stream **412** according to known principles to separate H₂S out of the feed gas stream **405**. The lean solvent stream **412** comprises a hindered amine which, as previously described, achieves selective H₂S removal by reacting more quickly with H₂S than with CO₂. As previously described, providing a very short contact time (via a shorter packing height or using a co-current contactor, for example) between the sour gas and amine allows the amine just enough time to pick up the H₂S but too little contact time to react with an appreciable amount of CO₂. Thus, more CO₂ slips, and less solvent is required.

A partially-treated gas stream **414** exits the top of the cold solvent contactor **402**. A dehydrator **416** removes water from the partially-treated gas stream **414**, and the treated gas stream is then introduced into the membrane separation system **404**. The membrane system **404** operates according to known principles to separate most of the carbon dioxide and hydrogen sulfide present in the partially-treated gas stream **414**. For example, the membrane system **404** may produce a fully-treated gas stream **408** with a composition of 2%-6% CO₂ at a temperature of about 30 °F and a pressure of about 500 psig. The membrane separation system **404** may also produce a permeate gas stream **410** having a composition of 50%-95% CO₂, or 70-95% CO₂, with the remainder being primarily natural gas with little to no H₂S. To meet pipeline specifications, the H₂S concentration in the sales gas stream **408** may be further reduced in a polishing unit **418** as previously explained. A carbon dioxide gas stream **419**, separated from the treated gas stream **414** in the polishing unit, may be re-compressed in a compressor **421** and combined with the permeate gas stream **410**. A rich solvent stream **420** exits the bottom of the cold solvent contactor **402**. The rich solvent stream **420** includes the H₂S from the feed gas stream **405** that is separated therefrom in the cold solvent contactor **402**. The rich solvent stream **420** is fed to a regenerator **422** that separates the H₂S (and at least some CO₂) from the solvent. An H₂S-rich gas stream **424** exits the regenerator **422** and may be sent to a sulfur recovery unit (not shown) according to known principles. The lean solvent stream **412** may be cooled by a refrigeration system or chiller **423** before being recirculated to the cold solvent contactor **402**.

The schematic of **Figure 4** is not intended to indicate that the sour gas separation system **400** is to include all the components shown in **Figure 4**. Further, any number of additional components may be included within the sour gas separation system **400**, depending on the details of the specific implementation. For example, the sour gas separation system **400** may include any suitable types of heaters, chillers, condensers, liquid pumps, gas compressors, filters, blowers, bypass lines, or other types of separation and/or fractionation equipment, valves, switches, controllers, pressure-measuring devices, temperature-measuring devices, level-measuring devices, or flow-measuring devices, among others.

The aspect disclosed in **Figure 4** has several advantages. For example, only a single cold solvent contactor and dehydration system would be required, as opposed to two cold solvent contactors and two to three dehydration systems as shown in other Figures herein. Dehydration takes place at high pressure and low temperature, in which the gas contains less water, particularly for the low pressure permeate system. The entire membrane system operates without the presence of H₂S, thereby improving plant safety. Additionally, the feed gas to the membrane system may now be cooler, which increases the selectivity to the permeating species, so the CO₂ stream has a lower hydrocarbon content. This last advantage could be applicable regardless of the use of the specific cold solvent(s) disclosed herein for use with the depicted aspects.

Throughout the disclosure reference is made to gas streams that are 'partially-treated' and 'fully-treated'. These terms are relative to each other, and their use does not imply that a fully-treated gas stream cannot be subject to additional processes or treatments.

The cold solvent contactors depicted in **Figures 2-4** and described herein are shown as conventional contacting vessels in which an upwardly moving gas stream contacts a downwardly moving solvent in a packing section. According to aspects of the disclosure, the height of the packing sections is reduced to minimize the absorption of CO₂ by the solvent. In another aspect, any of the disclosed cold solvent contactors may operate according to a co-current flow scheme in which the gas stream is moving in the same direction as the solvent it is contacting. The co-current flow scheme may include one or more co-current contacting systems connected in parallel, in series within a pipe, or a combination of parallel and series configurations. A natural gas stream and a solvent stream may move together, i.e., co-currently, within each co-current contacting system. In general, co-current contactors can operate at much higher fluid velocities than counter-current contacting systems. As a result, co-current contacting systems tend to be smaller than counter-current contactors that use standard towers with packing or trays. Further, the co-current contacting systems are smaller than conventional pressure vessels of equivalent processing capacity, and thus are more suited to modular design/construction, offshore deployment, de-bottlenecking applications, and applications where visual pollution may be a factor. In selective H₂S and/or CO₂ separation applications, two to three co-current contacting systems in series may be used to separate said impurities from a gas stream. Additionally, the dehydration and/or polishing steps performed in the disclosed aspects may be performed by one or more co-current contacting systems.

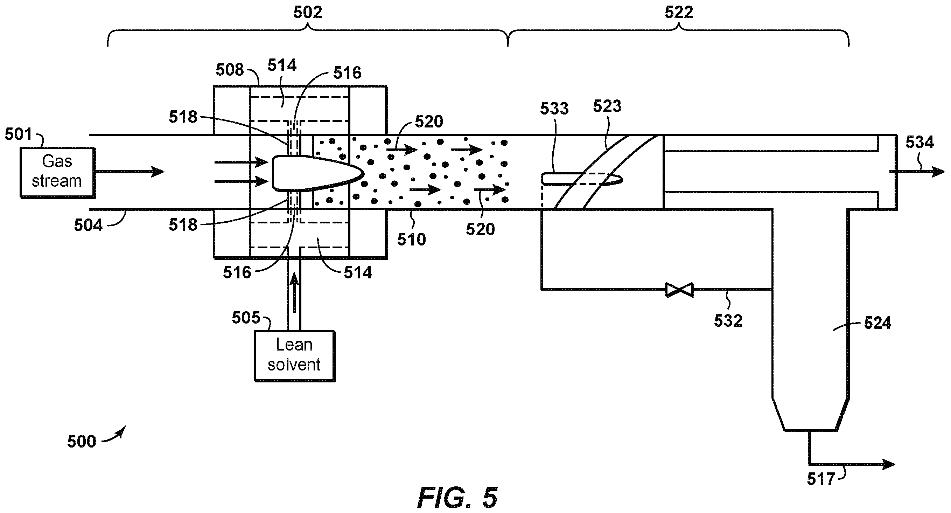

**Figure 5** illustrates the co-current contacting system **500** in further detail. The co-current contacting system **500** can provide for the separation of components within a gas stream, such as a natural gas stream **501.** The co-current contacting system **500** can include a co-current contactor **502** that is positioned in-line within a pipe **504.** The co-current contactor **502** may include a number of components that provide for the efficient contacting of a liquid droplet stream, such as a lean solvent stream **505**, with a flowing gas stream, such as natural gas stream **501,** for the separation of hydrogen sulfide (H₂S) from the natural gas stream **501.**

The co-current contactor **502** may include a droplet generator **508** and a mass transfer section **510**. As shown in **Figure 5****,** the natural gas stream **501** may be flowed through the pipe **504** and into the droplet generator **508.** The lean solvent stream **505** may also be flowed into the droplet generator **508,** for example, through a hollow space **514** coupled to flow channels 516 in the droplet generator **508**.

From the flow channels **516**, the lean solvent stream **505** is released into the natural gas stream **501** as fine droplets through injection orifices **518**, and is then flowed into the mass transfer section **510**. This can result in the generation of a treated gas stream **520** within the mass transfer section **510**. The treated gas stream **520** may include small liquid droplets dispersed in a gas phase. For H₂S separation processes, the liquid droplets may include H₂S molecules from the natural gas stream **501** that are absorbed or dissolved into the lean solvent stream **505**.

The treated gas stream **520** may be flowed from the mass transfer section **510** to a separation system **522**, which includes a cyclonic separator **523** and a collector **524**. Alternatively the separation system may include a mesh screen, or a settling vessel. Preferably, in-line cyclonic separators may be used to realize the benefits of compactness and reduced diameter. The cyclonic separator **523** removes the liquid droplets from the gas phase. The liquid droplets, which as previously stated may include H₂S absorbed or dissolved into the lean solvent stream **505**, are diverted into collector **524**, which directs the collected liquids as a rich solvent stream **517** to a regenerator (not shown). A pressure equalization line **532** may extend from the collector **524** and operates to allow gas in the collector to return to the separation system **522**. In an aspect, this gas flows via a nozzle **533** or eductor situated inside the separation system **522**. A processed gas stream **534**, from which the H₂S and rich solvent has been separated, exits the separation system **522** in an in-line orientation with the pipe **504**. The amount of H₂S in processed gas stream **534**, as measured in weight percentage, is lower than the amount of H₂S in natural gas stream **501**.

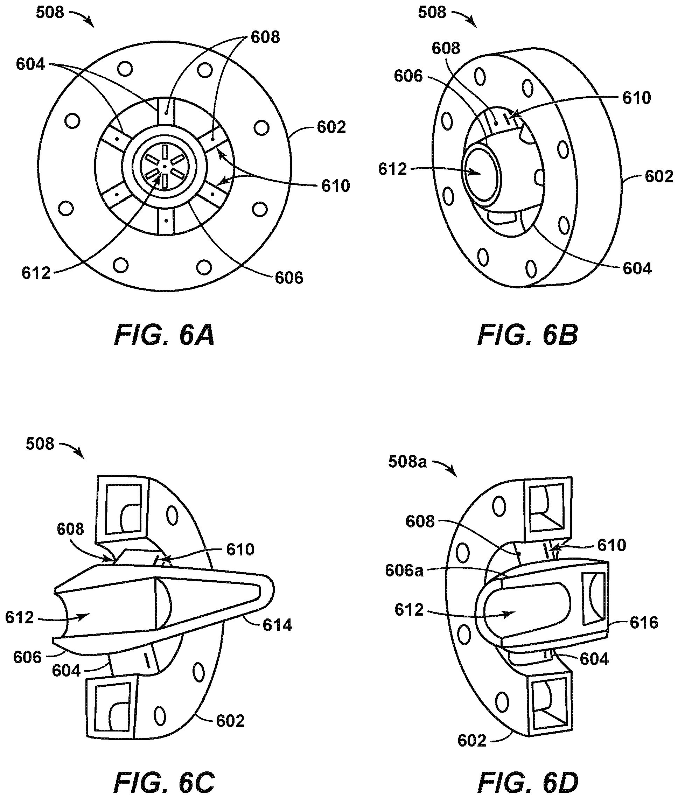

**Figure 6A** is a front view of droplet generator **508** according to disclosed aspects. The droplet generator **508** is a contacting device that may be implemented within a co-current contactor, for example, in the co-current contactor **502** described with respect to the co-current contacting system **500** of **Figure 5****.** The front view of the droplet generator **508** represents an upstream view of the droplet generator.

The droplet generator **508** may include an outer annular support ring **602**, a number of spokes **604** extending from the annular support ring **602**, and a gas entry cone **606**. The annular support ring **602** may secure the droplet generator **508** in-line within the pipe. In addition, the spokes **604** may provide support for the gas entry cone **606.**

The annular support ring **602** may be designed as a flanged connection, or as a removable or fixed sleeve inside the pipe. In addition, the annular support ring **602** may include a liquid feed system and a hollow channel described further with respect to **Figures 6C** and **6D****.** A liquid stream, such as a lean solvent stream **505,** may be fed to the droplet generator **508** via the hollow channel in the annular support ring **602**. The lean solvent stream **505** may comprise a solvent such as Flexsorb/SE. The hollow channel may allow equal distribution of the liquid stream along the perimeter of the droplet generator **508**.

Small liquid channels within the annular support ring **602** may provide a flow path for the lean solvent stream to flow through liquid injection orifices **608** within the spokes **604**. The liquid injection orifices **608** may be located on or near the leading edge of each spoke **604**. Placement of the liquid injection orifices **608** on the spokes **604** may allow the lean solvent stream to be uniformly distributed in a gas stream that is directed between the spokes **604**. Specifically, the lean solvent stream may be contacted by the portion of the natural gas stream **501** flowing through the gaps between the spokes **604**, and can be sheared into small droplets and entrained in the gas phase.

A portion of the natural gas stream flows between the spokes to the mass transfer section while the remainder of the gas stream flows into the gas entry cone **606** through a gas inlet **612.** The gas entry cone **606** may block a cross-sectional portion of the pipe. The spokes **604** include gas exit slots **610** that allow the natural gas stream to be flowed out of the gas entry cone **606**. This may increase the velocity of the natural gas stream as it flows through the pipe. The gas entry cone **606** may direct a predetermined amount of the natural gas stream to the gas exit slots **610** on the spokes **604**.

Some of the lean solvent stream injected through the spokes **604** may be deposited on the surface of the spokes **604** as a liquid film. As the natural gas stream flows through the gas entry cone **606** and is directed out of the gas exit slots **610** on the spokes **604**, the natural gas stream may sweep, or blow, much of the liquid film off the surface of the spokes **604**. This may enhance the dispersion of the lean solvent stream into the gas phase. Further, the obstruction to the flow of the natural gas stream and the shearing effect created by the exit of the natural gas stream gas through the gas exit slots may provide a zone with an increased turbulent dissipation rate. This may result in the generation of smaller droplets that enhance the mass transfer rate between the lean solvent stream and the natural gas stream.

The dimensions of various components of the droplet generator **508** may be varied such that the natural gas stream flows at a high velocity. This may be accomplished via either a sudden reduction in the diameter of the annular support ring **602** or a gradual reduction in the diameter of the annular support ring **602**. The outer wall of the droplet generator **508** may be slightly converging in shape, terminating at the point where the natural gas stream and the lean solvent stream are discharged into the downstream pipe. This can allow for the shearing and re-entrainment of any solvent film that is removed from the droplet generator **508**. Further, a radial inward ring, grooved surface, or other suitable equipment may be included on the outer diameter of the droplet generator **508** near the point where the natural gas stream and the lean solvent stream are discharged into the downstream pipe. This may enhance the degree of liquid entrainment within the gas phase.

The downstream end of the droplet generator **508** may discharge into a section of pipe (not shown). The section of pipe can be a straight section of pipe, or a concentrically expanding section of pipe. The gas entry cone **606** may terminate with a blunt ended cone or a tapered ended cone. In other aspects, the gas entry cone **606** can terminate with a ridged cone, which can include multiple concentric ridges along the cone that provide multiple locations for droplet generation. In addition, any number of gas exit slots **610** may be provided on the cone itself to allow for the removal of solvent film from the droplet generator **508**.

**Figure 6B** is a side perspective view of the droplet generator **508**. Like numbered items are as described with respect to **Figure 6A****.** As shown in **Figure 6B**, the upstream portion of the gas entry cone **606** may extend further into the pipe than the annular support ring **602** and the spokes **604** in the upstream direction. The downstream portion of the gas entry cone **606** can also extend further into the pipe than the annular support ring **602** and the spokes **604** in the downstream direction. The length of the gas entry cone **606** in the downstream direction depends on the type of cone at the end of the gas entry cone **606**, as described further with respect to **Figures 6C** and **6D**.

**Figure 6C** is a cross-sectional side perspective view of the droplet generator **508** according to a disclosed aspect. Like numbered items are as described with respect to **Figures 6A** and **6B**. According to **Figure 6C**, the gas entry cone **606** of the droplet generator **508** terminates with a tapered ended cone **614**. Terminating the gas entry cone **606** with a tapered ended cone **614** may reduce the overall pressure drop in the pipe caused by the droplet generator **508**.

**Figure 6D** is a cross-sectional side perspective view of the droplet generator **508a** according to another disclosed aspect. Like numbered items are as described with respect to **Figures 6A-6C**. According to **Figure 6D**, the gas entry cone **606a** of the droplet generator **508a** terminates with a blunt ended cone **616**. Terminating the gas entry cone **606a** with a blunt ended cone **616** may encourage droplet formation in the center of the pipe.

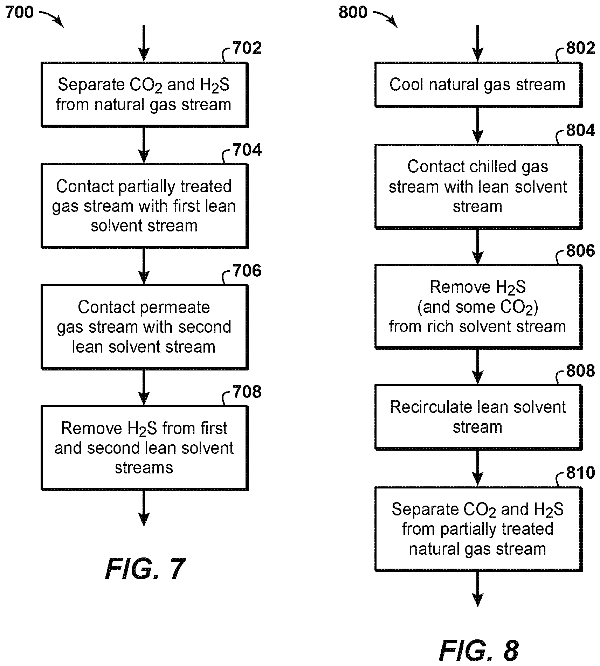

**Figure 7** is a flowchart of a method **700** of separating impurities from a natural gas stream according to disclosed aspects. At block **702** carbon dioxide (CO₂) and hydrogen sulfide (H₂S) are separated from the natural gas stream in a membrane separation system, thereby creating a partially-treated gas stream and a permeate gas stream. The permeate gas stream is comprised primarily of H₂S and CO₂. The partially-treated gas stream is comprised primarily of natural gas. The partially-treated gas stream and the permeate gas stream are at a lower temperature than the natural gas stream. At block **704** the partially-treated gas stream is contacted with a first lean solvent stream in a first contactor to separate H₂S from the partially-treated gas stream, thereby producing a first rich solvent stream and a fully-treated gas stream. At block **706** the permeate gas stream is contacted with a second lean solvent stream in a second contactor to separate H₂S therefrom, to produce a second rich solvent stream and a CO₂ gas stream; At block **708** H₂S is removed from the first and second rich solvent streams, thereby producing the first and second lean solvent streams.

**Figure 8** is a flowchart of a method **800** of separating impurities from a natural gas stream according to aspects of the disclosure, not according to the present invention. At block **802** the natural gas stream is cooled through heat exchange with one or more process streams to produce a chilled gas stream. At block **804** the chilled gas stream is contacted with a lean solvent stream in a contactor to separate hydrogen sulfide (H₂S) from the chilled gas stream, thereby producing a rich solvent stream and a partially-treated gas stream. At block **806** H₂S and at least some CO₂ is removed from the rich solvent stream to produce the lean solvent stream. At block **808** the lean solvent stream is recirculated to the contactor. At block **810** CO₂ and H₂S are separated from the partially-treated gas stream in a membrane separation system, thereby creating a fully-treated gas stream and a permeate gas stream. The permeate gas stream is comprised primarily of H₂S and CO₂. The fully-treated gas stream is comprised primarily of natural gas. The fully-treated gas stream and the permeate gas stream are at a lower temperature than the partially-treated gas stream. The fully-treated gas stream and the permeate gas stream comprise the one or more process streams.

The steps depicted in **Figures 7** and **8** are provided for illustrative purposes only and a particular step may not be required to perform the disclosed methodology. Moreover, **Figures 7** and **8** may not illustrate all the steps that may be performed. The claims, and only the claims, define the disclosed system and methodology.

The aspects described herein have several advantages over known technologies. For example, the described technology may greatly reduce the size and cost of systems that treat sour natural gas.

It should be understood that the numerous changes, modifications, and alternatives to the preceding disclosure can be made without departing from the scope of the appended claims.

## Claims

1. A method of separating impurities from a natural gas stream, comprising:
separating carbon dioxide (CO₂) and hydrogen sulfide (H₂S) from the natural gas stream in a membrane separation system, thereby creating a partially-treated gas stream and a permeate gas stream, the permeate gas stream being comprised primarily of H₂S and CO₂ and the partially-treated gas stream being comprised primarily of natural gas, wherein the partially-treated gas stream and the permeate gas stream are at a lower temperature than the natural gas stream;
contacting the partially-treated gas stream with a first lean solvent stream comprising a hindered amine in a first contactor to separate H₂S from the partially-treated gas stream, thereby producing a first rich solvent stream and a fully-treated gas stream;
contacting the permeate gas stream with a second lean solvent stream comprising a hindered amine in a second contactor to separate H₂S therefrom to produce a second rich solvent stream and a CO₂ gas stream; and
removing H₂S and CO₂ from the first and second rich solvent streams, thereby producing the first and second lean solvent streams.

2. The method of claim 1, further comprising:
cooling the partially-treated gas stream prior to the partially-treated gas stream being contacted by the first lean solvent stream; and
cooling the permeate gas stream prior to the permeate gas stream being contacted by the second lean solvent stream;
in particular, wherein cooling the partially-treated gas stream and the permeate gas stream is accomplished using one or more coolers.

3. The method of claim 1, further comprising cooling at least one of the first and second lean solvent streams to below ambient temperature after removing H₂S therefrom.

4. The method of claim 1, wherein removing H₂S from the first and second rich solvent streams comprises separating H₂S from the first and second rich solvent streams in a regenerator and producing a regenerated solvent stream;
in particular, the method, further comprising:
dividing the regenerated solvent stream to form the first and second lean solvent streams; or
further comprising:
forming the second lean solvent stream from the regenerated solvent stream; and forming the first lean solvent stream from the second rich solvent stream.

5. The method of claim 1, further comprising:
removing acid gas from the fully-treated gas stream; and
dehydrating the fully-treated stream;
in particular, the method, wherein the acid gas comprises CO₂, and further comprising:
compressing the CO₂ removed from the fully-treated gas stream; and
combining the compressed CO₂ with the CO₂ gas stream.

6. The method of any one of claims 1 to 5, wherein at least one of the first and second contactors is a co-current contacting system, and further comprising:
receiving a gas stream, comprising one of the natural gas stream and the permeate gas stream, and a liquid stream, comprising one of the first and second lean solvent streams, in the co-current contacting system located in-line within a pipe, the co-current contacting system including a droplet generator and a mass transfer section;
using the droplet generator, generating droplets from the liquid stream and dispersing the droplets into the gas stream;
using the mass transfer section, providing a mixed, two-phase flow having a vapor phase and a liquid phase, wherein the liquid phase includes the liquid stream with H₂S and/or CO₂ absorbed from the gas stream, and wherein the vapor phase includes the gas stream; and
separating the vapor phase from the liquid phase;
in particular, wherein the droplet generator comprises:
an annular support ring securing the droplet generator in-line within the pipe;
a plurality of spokes extending from the annular support ring, the annular support ring having a plurality of liquid channels allowing the liquid stream to flow through the plurality of spokes and out of injection orifices disposed on the plurality of spokes; and
a gas entry cone supported by the plurality of spokes and allowing
a first portion of the gas stream to flow through a hollow section of the gas entry cone and through gas exit slots included in the plurality of spokes, and
a second portion of the gas stream to flow around the gas entry cone and between the plurality of spokes, wherein the second portion of the gas stream is separate from the first portion of the gas stream.

7. The method of claim 6, wherein the co-current contacting system is one of a plurality of co-current contacting systems connected in series, said plurality of co-current contacting systems including a last co-current contacting system;
wherein each of the plurality of co-current contacting system comprises
a co-current contactor including a droplet generator and a mass transfer section, the droplet generator generating droplets of the liquid stream and dispersing the droplets into a gas stream received from a previous co-current contacting system, and the mass transfer section providing a mixed, two-phase flow having a vapor phase and a liquid phase; and
a separation system that separates the vapor phase from the liquid phase, wherein the vapor phase includes a treated gas stream and the liquid phase includes the liquid from which droplets are generated in a co-current contactor of a previous co-current contacting system.

8. A system (200) for separating impurities from a natural gas stream (202, 206), comprising:
a membrane separation system (208) configured to separate carbon dioxide (CO₂) and hydrogen sulfide (H₂S) from the natural gas stream, thereby creating a partially-treated gas stream (210) and a permeate gas stream (212), the permeate gas stream being comprised primarily of H₂S and CO₂ and the partially-treated gas stream being comprised primarily of natural gas, wherein the partially-treated gas stream and the permeate gas stream are at a lower temperature than the natural gas stream;
a first contactor (214) configured to contact the partially-treated gas stream (210) with a first lean solvent stream (216) comprising a hindered amine to separate H₂S from the partially-treated gas stream, thereby producing a first rich solvent stream (223) and a fully-treated gas stream (218);
a second contactor (224) configured to contact the permeate gas stream (212) with a second lean solvent stream (226) comprising a hindered amine to separate H₂S therefrom to produce a second rich solvent stream (230) and a CO₂ gas stream (228); and
a regenerator (232) configured to remove H₂S and CO₂ from the first and second rich solvent streams (223, 230), thereby producing the first and second lean solvent streams (216, 226)).

9. The system of claim 8, further comprising:
a first cooler (242) configured to cool the partially-treated gas stream (210) prior to the partially-treated gas stream being contacted by the first lean solvent stream (216); and
a second cooler (244) configured to cool the permeate gas stream (212) prior to the permeate gas stream being contacted by the second lean solvent stream (226).

10. The system of any one of claims 8 to 9, further comprising a refrigeration system (238) configured to cool at least one of the first and second lean solvent streams (216, 226) to below ambient temperature after removing H₂S therefrom.

11. The system of any one of claims 8 to 10, further comprising:
a polisher (220) configured to remove acid gas from the fully-treated gas stream (218); and
a dehydrator (222) configured to remove moisture from the fully-treated stream (218);
in particular the system, wherein the acid gas comprises CO₂ (221), and further comprising:
a compressor (219) configured to compress the CO₂ (221) removed from the fully-treated gas stream (218).

12. The system of any one of claims 8 to 11, wherein at least one of the first and second contactors (214, 224) is a co-current contacting system (500) located in-line within a pipe (504), the co-current contacting system receiving a gas stream (501), comprising one of the natural gas stream and the permeate gas stream, and a liquid stream (505), comprising one of the first and second lean solvent streams (216, 226), the co-current contacting system including
a co-current contactor (502) including a droplet generator (508) and a mass transfer section (510), the droplet generator (508) configured to generate droplets from the liquid stream (505) and to disperse the droplets into the gas stream (501), and the mass transfer section (510) configured to provide a mixed, two-phase flow having a vapor phase and a liquid phase, wherein the liquid phase includes the liquid stream with H₂S and/or CO₂ absorbed from the gas stream, and wherein the vapor phase includes the gas stream; and
a separation system (522) configured to separate the vapor phase from the liquid phase;
in particular, wherein the droplet generator (508) comprises:
an annular support ring (602) securing the droplet generator in-line within the pipe (504);
a plurality of spokes (604) extending from the annular support ring (602), the annular support ring having a plurality of liquid channels allowing the liquid stream to flow through the plurality of spokes and out of injection orifices (608) disposed on the plurality of spokes; and
a gas entry cone (606) supported by the plurality of spokes (604) and allowing
a first portion of the gas stream to flow through a hollow section of the gas entry cone (606) and through gas exit slots (610) included in the plurality of spokes (604), and
a second portion of the gas stream to flow around the gas entry cone (606) and between the plurality of spokes (604), wherein the second portion of the gas stream is separate from the first portion of the gas stream.

13. The system of claim 12, wherein the co-current contacting system is one of a plurality of co-current contacting systems connected in series, said plurality of co-current contacting systems including a last co-current contacting system;
wherein each of the plurality of co-current contacting systems (500) comprises
a co-current contactor (502) including a droplet generator (508) and a mass transfer section (510), the droplet generator generating droplets of the liquid stream and dispersing the droplets into a gas stream received from a previous co-current contacting system, and the mass transfer section providing a mixed, two-phase flow having a vapor phase and a liquid phase; and
a separation system (522) that separates the vapor phase from the liquid phase, wherein the vapor phase includes a treated gas stream (520) and the liquid phase includes liquid from which droplets are generated in a co-current contactor of a previous co-current contacting system.

## Patentansprüche

1. Verfahren zum Trennen von Verunreinigungen von einem Erdgasstrom, bei dem
Kohlendioxid (CO₂) und Schwefelwasserstoff (H₂S) von dem Erdgasstrom in einem Membrantrennsystem getrennt werden, wodurch ein teilbehandelter Gasstrom und ein Permeatgasstrom erzeugt werden, wobei der Permeatgasstrom vorwiegend aus H₂S und CO₂ zusammengesetzt ist und der teilbehandelte Gasstrom vorwiegend aus Erdgas zusammengesetzt ist, wobei der teilbehandelte Gasstrom und der Permeatgasstrom sich auf einer niedrigeren Temperatur als der Erdgasstrom befinden,
der teilbehandelte Gasstrom mit einem ersten mageren Lösungsmittelstrom, der ein gehindertes Amin umfasst, in einem ersten Kontaktor kontaktiert wird, um H₂S von dem teilbehandelten Gasstrom zu trennen, wodurch ein erster reicher Lösungsmittelstrom und ein vollständig behandelter Gasstrom produziert werden,
der Permeatgasstrom mit einem zweiten mageren Lösungsmittelstrom, der ein gehindertes Amin umfasst, in einem zweiten Kontaktor kontaktiert wird, um H₂S davon zu trennen, wodurch ein zweiter reicher Lösungsmittelstrom und ein CO₂-Gasstrom produziert werden, und
H₂S und CO₂ von dem ersten und dem zweiten reichen Lösungsmittelstrom entfernt werden, wodurch der erste und der zweite magere Lösungsmittelstrom produziert werden.

2. Verfahren nach Anspruch 1, bei dem des Weiteren der teilbehandelte Gasstrom abgekühlt wird, bevor der teilbehandelte Gasstrom mit dem ersten mageren Lösungsmittelstrom kontaktiert wird, und
der Permeatgasstrom abgekühlt wird, bevor der Permeatgasstrom mit dem zweiten mageren Lösungsmittelstrom kontaktiert wird,
wobei das Abkühlen des teilbehandelten Gasstroms und des Permeatgasstroms insbesondere unter Verwendung von einem oder mehreren Kühlern bewerkstelligt wird.

3. Verfahren nach Anspruch 1, das des Weiteren Abkühlen von mindestens einem von dem ersten und dem zweiten mageren Lösungsmittelstrom auf unter Umgebungstemperatur umfasst, nachdem H₂S davon entfernt wurde.

4. Verfahren nach Anspruch 1, bei dem Entfernen von H₂S von dem ersten und dem zweiten reichen Lösungsmittelstrom Trennen von H₂S von dem ersten und dem zweiten reichen Lösungsmittelstrom in einem Regenerierer und Produzieren eines regenerierten Lösungsmittelstroms umfasst,
wobei das Verfahren insbesondere des Weiteren
Teilen des regenerierten Lösungsmittelstroms umfasst, um den ersten und den zweiten mageren Lösungsmittelstrom zu bilden, oder das des Weiteren
Bilden des zweiten mageren Lösungsmittelstroms aus dem regenerierten Lösungsmittelstrom und
Bilden des ersten mageren Lösungsmittelstroms aus dem zweiten reichen Lösungsmittelstrom umfasst.

5. Verfahren nach Anspruch 1, bei dem des Weiteren saures Gas aus dem vollständig behandelten Gasstrom entfernt wird, und
der vollständig behandelte Strom dehydratisiert wird,
wobei das Verfahren insbesondere, wenn das saure Gas CO₂ umfasst, des Weiteren umfasst, dass
das aus dem vollständig behandelten Gasstrom entfernte CO₂ komprimiert wird, und
das komprimierte CO₂ mit dem CO₂-Gasstromkombiniert wird.

6. Verfahren nach einem der Ansprüche 1 bis 5, bei dem mindestens einer von dem ersten und dem zweiten Kontaktor ein gleichlaufendes Kontaktierungssystem ist, bei dem des Weiteren ein Gasstrom, der einen von dem Erdgasstrom und dem Permeatgasstrom umfasst, und ein Flüssigkeitsstrom, der einen von dem ersten und dem zweiten mageren Lösungsmittelstrom umfasst, in dem gleichlaufenden Kontaktierungssystem empfangen werden, das sich inline innerhalb einer Rohrleitung befindet, wobei das gleichlaufende Kontaktierungssystem einen Tröpfchengenerator und einen Massentransferabschnitt einschließt,
unter Verwendung des Tröpfchengenerators Tröpfchen aus der Flüssigkeit generiert werden und die Tröpfchen in einem Gasstrom dispergiert werden,
unter Verwendung des Massentransferabschnitts ein gemischter Zweiphasenfluss mit einer Dampfphase und einer Flüssigphase bereitgestellt wird, wobei die Flüssigphase den Flüssigkeitsstrom mit H₂S und/oder CO₂ einschließt, die aus dem Gasstrom absorbiert wurden, und wobei der Dampfstrom den Gasstrom einschließt, und
die Dampfphase von der Flüssigphase getrennt wird,
wobei der Tröpfchengenerator insbesondere umfasst:
einen kranzförmigen Haltering, der den Tröpfchengenerator inline innerhalb der Rohrleitung sichert,
eine Vielzahl von Speichen, die sich von dem kranzförmigen Haltering erstrecken, wobei der kranzförmige Haltering eine Vielzahl von Flüssigkeitskanälen aufweist, die zulassen, dass der Flüssigkeitsstrom durch die Vielzahl der Speichen hindurch und aus Injektionsdüsen heraus fließt, die auf der Vielzahl von Speichen angeordnet sind, und
einen Gaseintrittskegel, der von der Vielzahl von Speichen gehalten wird, und zulässt, dass
ein erster Anteil des Gasstroms durch einen hohlen Abschnitt des Gaseintrittskegels und durch Gasaustrittsschlitze hindurch fließt, die in die Vielzahl von Speichen eingeschlossen sind, und
ein zweiter Anteil des Gasstroms um den Gaseintrittskegel herum und zwischen der Vielzahl von Speichen fließt, wobei der zweite Anteil des Gasstroms getrennt von dem ersten Anteil des Gasstroms vorliegt.

7. Verfahren nach Anspruch 6, bei dem das gleichlaufende Kontaktierungssystem eines von einer Vielzahl von in Reihe verbundenen gleichlaufenden Kontaktierungssystemen ist, wobei die Vielzahl der gleichlaufenden Kontaktierungssysteme ein letztes gleichlaufendes Kontaktierungssystem einschließt, wobei jedes von der Vielzahl der gleichlaufenden Kontaktierungssysteme umfasst:
einen gleichlaufenden Kontaktor, der einen Tröpfchengenerator und einen Massentransferabschnitt einschließt, wobei der Tröpfchengenerator Tröpfchen des Flüssigkeitsstroms generiert und die Tröpfchen in einen Gasstrom hinein dispergiert, der von einem vorhergehenden gleichlaufenden Kontaktierungssystem empfangen wurde, und wobei der Massentransferabschnitt einen gemischten Zweiphasenfluss mit einer Dampfphase und einer Flüssigphase bereitstellt, und
ein Trennsystem, das die Dampfphase von der Flüssigphase trennt, wobei die Dampfphase einen behandelten Gasstrom einschließt und die Flüssigphase die Flüssigkeit einschließt, aus der Tröpfchen in einem gleichlaufenden Kontaktor eines vorhergehenden gleichlaufenden Kontaktierungssystems generiert werden.

8. System (200) zum Trennen von Verunreinigungen von einem Erdgasstrom (202, 206), welches folgendes umfasst:
ein Membrantrennsystem (208), das ausgestaltet ist, um Kohlendioxid (CO₂) und Schwefelwasserstoff (H₂S) von dem Erdgasstrom zu trennen, wodurch ein teilbehandelter Gasstrom (210) und ein Permeatgasstrom (212) erzeugt werden, wobei der Permeatgasstrom vorwiegend aus H₂S und CO₂ zusammengesetzt ist und der teilbehandelte Gasstrom vorwiegend aus Erdgas zusammengesetzt ist, wobei der teilbehandelte Gasstrom und der Permeatgasstrom sich auf einer niedrigeren Temperatur als der Erdgasstrom befinden,
einen ersten Kontaktor (214), der ausgestaltet ist, um den teilbehandelten Gasstrom (210) mit einem ersten mageren Lösungsmittelstrom (216), der ein gehindertes Amin umfasst, zu kontaktieren, um H₂S von dem teilbehandelten Gasstrom zu trennen, wodurch ein erster reicher Lösungsmittelstrom (223) und ein vollständig behandelter Gasstrom (218) produziert werden,
einen zweiten Kontaktor (224), der ausgestaltet ist, um den Permeatgasstrom (212) mit einem zweiten mageren Lösungsmittelstrom (226), der ein gehindertes Amin umfasst, zu kontaktieren, um H₂S davon zu trennen, wodurch ein zweiter reicher Lösungsmittelstrom (230) und ein CO₂-Gasstrom(228) produziert werden, und
einen Regenerierer (232), der ausgestaltet ist, um H₂S und CO₂ von dem ersten und dem zweiten reichen Lösungsmittelstrom (223, 230) zu entfernen, wodurch der erste und der zweite magere Lösungsmittelstrom (216, 226) produziert werden.

9. System nach Anspruch 8, das des Weiteren folgendes umfasst:
einen ersten Kühler (242), der ausgestaltet ist, um den teilbehandelten Gasstrom (210) abzukühlen, bevor der teilbehandelte Gasstrom mit dem ersten mageren Lösungsmittelstrom (216) kontaktiert wird, und
einen zweiten Kühler (244), der ausgestaltet ist, um den Permeatgasstrom (212) abzukühlen, bevor der Permeatgasstrom mit dem zweiten mageren Lösungsmittelstrom (226) kontaktiert wird.

10. System nach einem der Ansprüche 8 bis 9, das des Weiteren ein Kühlsystem (238) umfasst, das ausgestaltet ist, um mindestens einen von dem ersten und dem zweiten mageren Lösungsmittelstrom (216, 226) auf unter Umgebungstemperatur abzukühlen, nachdem H₂S davon entfernt wurde.

11. System nach einem der Ansprüche 8 bis 10, das des Weiteren folgendes umfasst:
eine Schönungseinrichtung (220), die ausgestaltet ist, um saures Gas von dem vollständig behandelten Gasstrom (218) zu entfernen, und
einen Dehydratisierer (222), der ausgestaltet ist, um Feuchtigkeit von dem vollständig behandelten Strom (218) zu entfernen,
wobei das System insbesondere, wenn das saure Gas CO₂ (221) umfasst, des Weiteren einen Kompressor (219) umfasst, der ausgestaltet ist, um aus dem vollständig behandelten Gasstrom (218) entferntes CO₂ (221) zu komprimieren.

12. System nach einem der Ansprüche 8 bis 11, bei dem mindestens einer von dem ersten und dem zweiten Kontaktor (214, 224) ein gleichlaufendes Kontaktierungssystem (500) ist, das sich inline innerhalb einer Rohrleitung (504) befindet, wobei das gleichlaufende Kontaktierungssystem einen Gasstrom (501), der einen von dem Erdgasstrom und dem Permeatgasstrom umfasst, und einen Flüssigkeitsstrom (505) empfängt, der einen von dem ersten und dem zweiten mageren Lösungsmittelstrom (216, 226) umfasst, wobei das gleichlaufende Kontaktierungssystem folgendes einschließt:
einen gleichlaufenden Kontaktor (502), der einen Tröpfchengenerator (508) und einen Massentransferabschnitt (510) einschließt, wobei der Tröpfchengenerator (508) ausgestaltet ist, um Tröpfchen aus dem Flüssigkeitsstrom (505) zu generieren und die Tröpfchen in den Gasstrom (501) hinein zu dispergieren, und wobei der Massentransferabschnitt (510) ausgestaltet ist, um einen gemischten Zweiphasenfluss mit einer Dampfphase und einer Flüssigphase bereitzustellen, wobei die Flüssigphase den Flüssigkeitsstrom mit H₂S und/oder CO₂ einschließt, die aus dem Gasstrom absorbiert worden sind, und wobei die Dampfphase den Gasstrom einschließt, und
ein Trennsystem (522), das ausgestaltet ist, um die Dampfphase von der Flüssigphase zu trennen,
wobei der Tröpfchengenerator (508) insbesondere umfasst:
einen kranzförmigen Haltering (602), der den Tröpfchengenerator inline innerhalb der Rohrleitung (504) sichert,
eine Vielzahl von Speichen (604), die sich von dem kranzförmigen Haltering (602) erstrecken, wobei der kranzförmige Haltering eine Vielzahl von Flüssigkeitskanälen aufweist, die zulassen, dass der Flüssigkeitsstrom durch die Vielzahl der Speichen hindurch und aus Injektionsdüsen (608) heraus fließt, die auf der Vielzahl von Speichen angeordnet sind, und
einen Gaseintrittskegel (606), der von der Vielzahl von Speichen (604) gehalten wird und zulässt, dass
ein erster Anteil des Gasstroms durch einen hohlen Abschnitt des Gaseintrittskegels (606) und durch Gasaustrittsschlitze (610) hindurch fließt, die in die Vielzahl von Speichen (604) eingeschlossen sind, und
ein zweiter Anteil des Gasstroms um den Gaseintrittskegel (606) herum und zwischen der Vielzahl von Speichen (604) fließt, wobei der zweite Anteil des Gasstroms getrennt von dem ersten Anteil des Gasstroms vorliegt.

13. System nach Anspruch 12, bei dem das gleichlaufende Kontaktierungssystem eines von einer Vielzahl von in Reihe verbundenen gleichlaufenden Kontaktierungssystemen ist, wobei die Vielzahl der gleichlaufenden Kontaktierungssysteme ein letztes gleichlaufendes Kontaktierungssystem einschließt, wobei jedes von der Vielzahl der gleichlaufenden Kontaktierungssysteme (500) umfasst:
einen gleichlaufenden Kontaktor (502), der einen Tröpfchengenerator (508) und einen Massentransferabschnitt (510) einschließt, wobei der Tröpfchengenerator Tröpfchen des Flüssigkeitsstroms generiert und die Tröpfchen in einen Gasstrom hinein dispergiert, der von einem vorhergehenden gleichlaufenden Kontaktierungssystem empfangen wurde, und wobei der Massentransferabschnitt einen gemischten Zweiphasenfluss mit einer Dampfphase und einer Flüssigphase bereitstellt, und
ein Trennsystem (522), das die Dampfphase von der Flüssigphase trennt, wobei die Dampfphase einen behandelten Gasstrom (520) einschließt und die Flüssigphase die Flüssigkeit einschließt, aus der Tröpfchen in einem gleichlaufenden Kontaktor eines vorhergehenden gleichlaufenden Kontaktierungssystems generiert werden.

## Revendications

1. Procédé de séparation d'impuretés d'un courant de gaz naturel, comprenant :
la séparation de dioxyde de carbone (CO₂) et de sulfure d'hydrogène (H₂S) du courant de gaz naturel dans un système de séparation membranaire, ce qui crée ainsi un courant de gaz partiellement traité et un courant de perméat gazeux, le courant de perméat gazeux étant principalement composé de H₂S et CO₂ et le courant de gaz partiellement traité étant principalement composé de gaz naturel, le courant de gaz partiellement traité et le courant de perméat gazeux étant à une température inférieure à celle du courant de gaz naturel ;
la mise en contact du courant de gaz partiellement traité avec un premier courant de solvant pauvre comprenant une aminé stériquement encombrée dans un premier dispositif de mise en contact pour séparer le H₂S du courant de gaz partiellement traité, ce qui produit ainsi un premier courant de solvant riche et un courant de gaz complètement traité ;
la mise en contact du courant de perméat gazeux avec un deuxième courant de solvant pauvre comprenant une aminé stériquement encombrée dans un deuxième dispositif de mise en contact pour en séparer le H₂S pour produire un deuxième courant de solvant riche et un courant de CO₂ gazeux ; et
le retrait de H₂S et CO₂ des premier et deuxième courants de solvant riche, ce qui produit ainsi les premier et deuxième courants de solvant pauvre.

2. Procédé de la revendication 1, comprenant en outre :
le refroidissement du courant de gaz partiellement traité avant que le courant de gaz partiellement traité soit mis en contact avec le premier courant de solvant pauvre ; et
le refroidissement du courant de perméat gazeux avant que le courant de perméat gazeux soit mis en contact avec le deuxième courant de solvant pauvre ;
en particulier dans lequel le refroidissement du courant de gaz partiellement traité et du courant de perméat gazeux est accompli au moyen d'un ou plusieurs refroidisseurs.

3. Procédé de la revendication 1, comprenant en outre le refroidissement d'au moins un des premier et deuxième courants de solvant pauvre au-dessous de la température ambiante après en avoir retiré le H₂S.

4. Procédé de la revendication 1, dans lequel le retrait de H₂S des premier et deuxième courants de solvant riche comprend la séparation de H₂S des premier et deuxième courants de solvant riche dans un régénérateur et la production d'un courant de solvant régénéré ;
en particulier, le procédé comprenant en outre :
la division du courant de solvant régénéré pour former les premier et deuxième courants de solvant pauvre ; ou
comprenant en outre :
la formation du deuxième courant de solvant pauvre à partir du courant de solvant régénéré ; et
la formation du premier courant de solvant pauvre à partir du deuxième courant de solvant riche.

5. Procédé de la revendication 1, comprenant en outre :
le retrait de gaz acide du courant de gaz complètement traité ; et
la déshydratation du courant complètement traité ;
en particulier, le procédé, dans lequel le gaz acide comprend du CO₂, et comprenant en outre :
la compression du CO₂ retiré du courant de gaz complètement traité ; et
la combinaison du CO₂ comprimé avec le courant de CO₂ gazeux.

6. Procédé de l'une quelconque des revendications 1 à 5, dans lequel au moins un des premier et deuxième dispositifs de mise en contact est un système de mise en contact à co-courant, et comprenant en outre :
la réception d'un courant gazeux, comprenant soit le courant de gaz naturel, soit le courant de perméat gazeux, et d'un courant liquide, comprenant un des premier et deuxième courants de solvant pauvre, dans le système de mise en contact à co-courant positionné en ligne à l'intérieur d'un tuyau, le système de mise en contact à co-courant comportant un générateur de gouttelettes et une section de transfert de masse ;
au moyen du générateur de gouttelettes, la génération de gouttelettes à partir du courant liquide et la dispersion des gouttelettes dans le courant gazeux ;
au moyen de la section de transfert de masse, la fourniture d'un écoulement mixte, biphasique ayant une phase vapeur et une phase liquide, la phase liquide comportant le courant liquide avec du H₂S et/ou du CO₂ absorbés à partir du courant gazeux, et la phase vapeur comportant le courant gazeux ; et
la séparation de la phase vapeur de la phase liquide ;
en particulier dans lequel le générateur de gouttelettes comprend :
une bague de support annulaire fixant le générateur de gouttelettes en ligne à l'intérieur du tuyau ;
une pluralité de rayons s'étendant depuis la bague de support annulaire, la bague de support annulaire ayant une pluralité de canaux de liquide permettant au courant liquide de circuler à travers la pluralité de rayons et hors d'orifices d'injection disposés sur la pluralité de rayons ; et
un cône d'entrée de gaz supporté par la pluralité de rayons et permettant
à une première partie du courant gazeux de circuler à travers une section creuse du cône d'entrée de gaz et à travers des fentes de sortie de gaz contenues dans la pluralité de rayons, et
à une deuxième partie du courant gazeux de circuler autour du cône d'entrée de gaz et entre la pluralité de rayons, la deuxième partie du courant gazeux étant séparée de la première partie du courant gazeux.

7. Procédé de la revendication 6, dans lequel le système de mise en contact à co-courant est l'un d'une pluralité de systèmes de mise en contact à co-courant reliés en série, ladite pluralité de systèmes de mise en contact à co-courant comportant un dernier système de mise en contact à co-courant ;
dans lequel chacun de la pluralité de systèmes de mise en contact à co-courant comprend
un dispositif de mise en contact à co-courant comportant un générateur de gouttelettes et une section de transfert de masse, le générateur de gouttelettes générant des gouttelettes du courant liquide et dispersant les gouttelettes dans un courant gazeux reçu depuis un système de mise en contact à co-courant précédent, et la section de transfert de masse fournissant un écoulement mixte, biphasique ayant une phase vapeur et une phase liquide ; et
un système de séparation qui sépare la phase vapeur de la phase liquide, la phase vapeur comportant un courant de gaz traité et la phase liquide comportant le liquide à partir duquel des gouttelettes sont générées dans un dispositif de mise en contact à co-courant d'un système de mise en contact à co-courant précédent.

8. Système (200) destiné à séparer des impuretés d'un courant de gaz naturel (202, 206), comprenant :
un système de séparation membranaire (208) configuré pour séparer du dioxyde de carbone (CO₂) et du sulfure d'hydrogène (H₂S) du courant de gaz naturel, créant ainsi un courant de gaz partiellement traité (210) et un courant de perméat gazeux (212), le courant de perméat gazeux étant principalement composé de H₂S et CO₂ et le courant de gaz partiellement traité étant principalement composé de gaz naturel, le courant de gaz partiellement traité et le courant de perméat gazeux étant à une température inférieure à celle du courant de gaz naturel ;
un premier dispositif de mise en contact (214) configuré pour mettre en contact le courant de gaz partiellement traité (210) avec un premier courant de solvant pauvre (216) comprenant une aminé stériquement encombrée pour séparer le H₂S du courant de gaz partiellement traité, produisant ainsi un premier courant de solvant riche (223) et un courant de gaz complètement traité (218) ;
un deuxième dispositif de mise en contact (224) configuré pour mettre en contact le courant de perméat gazeux (212) avec un deuxième courant de solvant pauvre (226) comprenant une aminé stériquement encombrée pour en séparer le H₂S pour produire un deuxième courant de solvant riche (230) et un courant de CO₂ gazeux (228) ; et
un régénérateur (232) configuré pour séparer le H₂S et le CO₂ des premier et deuxième courants de solvant riche (223, 230), produisant ainsi les premier et deuxième courants de solvant pauvre (216, 226).

9. Système de la revendication 8, comprenant en outre :
un premier refroidisseur (242) configuré pour refroidir le courant de gaz partiellement traité (210) avant que le courant de gaz partiellement traité soit mis en contact avec le premier courant de solvant pauvre (216) ; et
un deuxième refroidisseur (244) configuré pour refroidir le courant de perméat gazeux (212) avant que le courant de perméat gazeux soit mis en contact avec le deuxième courant de solvant pauvre (226).

10. Système de l'une quelconque des revendications 8 à 9, comprenant en outre un système de réfrigération (238) configuré pour refroidir au moins un des premier et deuxième courants de solvant pauvre (216, 226) au-dessous de la température ambiante après en avoir retiré le H₂S.

11. Système de l'une quelconque des revendications 8 à 10, comprenant en outre :
un dispositif de polissage (220) configuré pour retirer du gaz acide du courant de gaz complètement traité (218) ; et
un dispositif de déshydratation (222) configuré pour retirer de l'humidité du courant complètement traité (218) ;
en particulier le système, dans lequel le gaz acide comprend du CO₂ (221), et comprenant en outre :
un compresseur (219) configuré pour comprimer le CO₂ (221) retiré du courant de gaz complètement traité (218) .

12. Système de l'une quelconque des revendications 8 à 11, dans lequel au moins un des premier et deuxième dispositifs de mise en contact (214, 224) est un système de mise en contact à co-courant (500) positionné en ligne à l'intérieur d'un tuyau (504), le système de mise en contact à co-courant recevant un courant gazeux (501), comprenant soit le courant de gaz naturel, soit le courant de perméat gazeux, et un courant liquide (505), comprenant un des premier et deuxième courants de solvant pauvre (216, 226), le système de mise en contact à co-courant comportant
un dispositif de mise en contact à co-courant (502) comportant un générateur de gouttelettes (508) et une section de transfert de masse (510), le générateur de gouttelettes (508) étant configuré pour générer des gouttelettes à partir du courant liquide (505) et pour disperser les gouttelettes dans le courant gazeux (501), et la section de transfert de masse (510) étant configurée pour fournir un écoulement mixte, biphasique ayant une phase vapeur et une phase liquide, la phase liquide comportant le courant liquide avec du H₂S et/ou du CO₂ absorbés à partir du courant gazeux, et la phase vapeur comportant le courant gazeux ; et
un système de séparation (522) configuré pour séparer la phase vapeur de la phase liquide ;
en particulier dans lequel le générateur de gouttelettes (508) comprend :
une bague de support annulaire (602) fixant le générateur de gouttelettes en ligne à l'intérieur du tuyau (504) ;
une pluralité de rayons (604) s'étendant depuis la bague de support annulaire (602), la bague de support annulaire ayant une pluralité de canaux de liquide permettant au courant liquide de circuler à travers la pluralité de rayons et hors d'orifices d'injection (608) disposés sur la pluralité de rayons ; et
un cône d'entrée de gaz (606) supporté par la pluralité de rayons (604) et permettant
à une première partie du courant gazeux de circuler à travers une section creuse du cône d'entrée de gaz (606) et à travers des fentes de sortie de gaz (610) contenues dans la pluralité de rayons (604), et
à une deuxième partie du courant gazeux de circuler autour du cône d'entrée de gaz (606) et entre la pluralité de rayons (604), la deuxième partie du courant gazeux étant séparée de la première partie du courant gazeux.

13. Système de la revendication 12, dans lequel le système de mise en contact à co-courant est l'un d'une pluralité de systèmes de mise en contact à co-courant reliés en série, ladite pluralité de systèmes de mise en contact à co-courant comportant un dernier système de mise en contact à co-courant ;
dans lequel chacun de la pluralité de systèmes de mise en contact à co-courant (500) comprend
un dispositif de mise en contact à co-courant (502) comportant un générateur de gouttelettes (508) et une section de transfert de masse (510), le générateur de gouttelettes générant des gouttelettes du courant liquide et dispersant les gouttelettes dans un courant gazeux reçu depuis un système de mise en contact à co-courant précédent, et la section de transfert de masse fournissant un écoulement mixte, biphasique ayant une phase vapeur et une phase liquide ; et
un système de séparation (522) qui sépare la phase vapeur de la phase liquide, la phase vapeur comportant un courant de gaz traité (520) et la phase liquide comportant le liquide à partir duquel des gouttelettes sont générées dans un dispositif de mise en contact à co-courant d'un système de mise en contact à co-courant précédent.
